# DEMANDE DE BREVET EUROPEEN

(11) **EP 3 431 845 A1**
(43) Date de publication de la demande: **23.01.2019**
(21) Numéro de dépôt: 18184085.1
(22) Date de dépôt: 18.07.2018
(51) Int. Cl.: F16K 27/02, E03B 7/10, E03B 9/02

(54) **ROBINET À SOUPAPE, COMPRENANT UN CORPS DE ROBINET ET UN DISPOSITIF ANTI-FISSURATION POUR EMPÊCHER LA FISSURATION DU CORPS EN PÉRIODE DE GEL**

(30) Priorité: 19.07.2017 FR 1756848
(71) Demandeur: Hesperia Developpement, 75008 Paris (FR)
(72) Inventeur: MENET THIBAULT, Georges, 73800 LES MARCHES (FR)
(74) Mandataire: Lavoix

(57) **Abrégé**

L'invention concerne un robinet à soupape (2), comprenant un corps de robinet (4), une soupape (6) et un dispositif anti-fissuration (8) pour empêcher la fissuration du corps en période de gel. Le dispositif anti-fissuration (8) comprend un tube en mousse (80) à cellules fermées, disposé à l'intérieur du corps et un élément de maintien (82) du tube en position contre une paroi interne (S4) du corps de robinet.

## Description

La présente invention concerne un robinet à soupape, notamment un robinet à soupape de jardin.

WO 2015/139758 A1 divulgue un robinet à soupape selon le préambule de la revendication 1.

Un robinet à soupape, parfois mieux connu sous le nom de robinet à clapet, est un robinet dans lequel l'organe de fermeture est un piston mobile en translation contre un siège. Lorsque l'organe de fermeture et le siège sont en contact, le robinet est fermé. A l'inverse, lorsque l'organe de fermeture n'est plus en contact avec le siège, le robinet est ouvert. Ainsi, les robinets à tournant sphérique, dans lesquels l'organe de fermeture prend la forme d'une demi-sphère, ne sont pas des robinets à soupape.

En hiver, la température descend souvent en dessous de 0°C. Ainsi, l'eau dans les robinets extérieurs, tels que les robinets de jardin, est susceptible de se transformer en glace. Ce changement de phase entraine une augmentation du volume occupé à l'intérieur du robinet et des fissures dans le corps du robinet. Lors du dégel, ces fissures conduisent à des fuites d'eau et le robinet doit être remplacé.

Pour pallier ce type de désagrément, il existe des dispositifs pour empêcher la fissuration du corps en période de gel sous l'effet de la solidification de l'eau stagnant à l'intérieur du robinet.

En particulier, la société SAS DEBEAUX propose une vanne thermostatique (sous la dénomination EXOGEL) qui s'ouvre automatiquement lorsque la température extérieure chute en dessous de 1°C. Ainsi, l'eau ne reste pas immobile dans la canalisation car un filet d'eau s'écoule en permanence dans une conduite de dérivation. Il n'y a alors pas de risque de gel.

D'autres dispositifs, comme celui développé par la société MERRILL sous la dénomination C100, présentent la particularité que la soupape du robinet et le siège de soupape correspondant sont déportée par rapport à l'organe de manoeuvre. Cela a pour avantage que le tronçon de canalisation à l'intérieur duquel est logée la soupape peut être enterré, et donc protégé du gel.

Enfin, la société EFFEBI propose un robinet à tournant sphérique très particulier, sous la dénomination SKY (marque déposée), à l'intérieur duquel est prévu un mécanisme complexe pour éviter la stagnation d'eau à l'intérieur de l'organe de fermeture sphérique lorsque le robinet demeure fermé en période de gel.

L'invention entend proposer un nouveau type de robinet à soupape, qui se caractérise par la présence d'un dispositif anti-fissuration beaucoup plus simple que ceux de l'art antérieur, et donc moins onéreux.

A cet l'effet l'invention concerne un robinet à soupape selon la revendication 1.

Grâce à l'invention, lors des périodes de gel, le tube en mousse est comprimé radialement du fait de l'expansion de volume d'eau se transformant en glace à l'intérieur du robinet. Le tube en mousse est dimensionné pour amortir l'expansion de l'eau lors du changement de phase et empêche ainsi que le corps du robinet se retrouve sous contraintes. De cette façon, on prévient l'apparition de fissures. Le tube en mousse est avantageusement maintenu en position, de telle manière qu'il reste plaqué contre la paroi interne du corps du robinet en fonctionnement normal et ne perturbe pas l'écoulement d'eau. En particulier, l'élément de maintien permet d'éviter que le tube vrille, ou se déforme de façon à se mettre en travers de l'écoulement d'eau.

Des aspects avantageux, mais non obligatoires, du robinet sont définis aux revendications 2 et suivantes.

L'invention est d'autres avantages de celle-ci apparaitront plus clairement à la lumière de la description qui va suivre de deux modes de réalisation d'un robinet à soupape conforme à son principe, donnée uniquement à titre d'exemple et faite en référence aux figures annexées dans lesquelles :
- La figure 1 est une vue en coupe d'un robinet à soupape conforme à un premier mode de réalisation de l'invention ; et
- La figure 2 est une vue en coupe d'un robinet à soupape conforme à un deuxième mode de réalisation de l'invention.

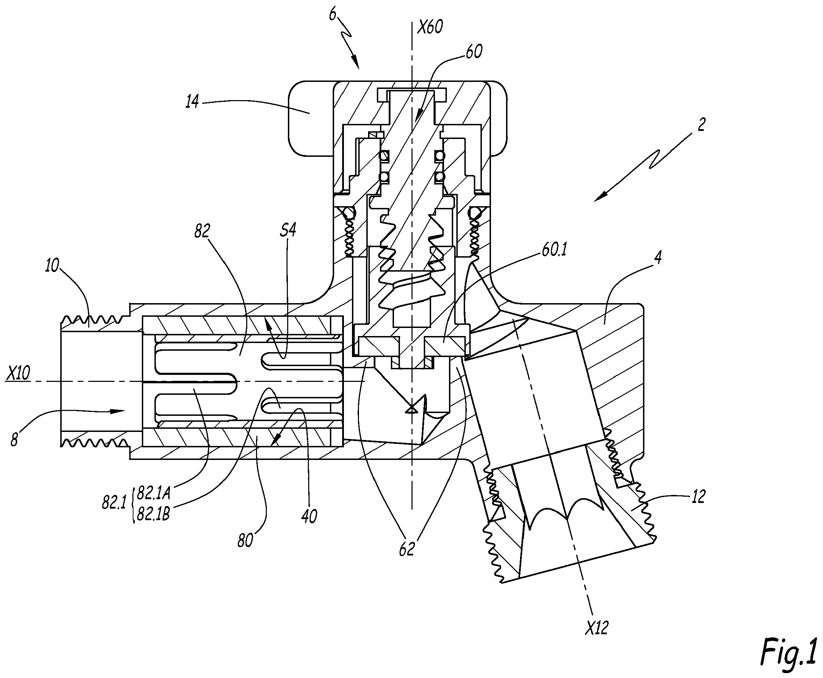

La figure 1 montre un premier mode de réalisation d'un robinet à soupape 2. Le robinet à soupape 2, qui peut parfois être mieux connu sous le nom de « robinet à clapet », est de préférence un robinet de jardin, pour alimenter par exemple un tuyau d'arrosage.

Le robinet 2 comprend un corps de robinet 4, une soupape 6 et un dispositif anti-fissuration 8 pour empêcher la fissuration du corps 4 en période de gel.

Dans l'exemple, le robinet 2 comprend un premier élément de raccordement 10, que l'on peut qualifier d'élément de raccordement amont, et un deuxième élément de raccordement 12, que l'on peut qualifier d'élément de raccordement aval. Le robinet 10 permet de couper sélectivement la communication fluidique entre les éléments de raccordement 10 et 12.

L'élément de raccordement amont 10 est centré sur un axe X10 normalement horizontal en configuration d'utilisation du robinet, alors que l'élément de raccordement aval 12 s'étend vers le bas, avec un axe central X12 formant un angle compris entre 90° et 120° par rapport à l'axe X10.

Dans l'exemple, les éléments de raccordement 10 et 12 sont des éléments de raccordement du type mâle. Toutefois, cet agencement est purement optionnel, dans la mesure où il ne s'agit que de l'une des configurations possibles.

La soupape 6 est caractéristique des robinets à soupape (ou à clapet) tel que celui représenté à la figure 1. Elle comprend classiquement un organe de fermeture mobile 60 et un siège 62 destiné à coopérer avec l'organe de fermeture 60 lors de la fermeture du robinet 2. L'organe de fermeture 60 est en liaison hélicoïdale. Il est manoeuvrable depuis l'extérieur du robinet par une molette 14 positionnée en partie haute du robinet.

La rotation de la molette 14 fait en même temps tourner et avancer l'organe de fermeture 60 en direction du siège 62. Ici, le pas du filet est tel que le robinet peut être fermé en un tour et demi à peu près, à partir d'une position complètement ouverte. L'organe de fermeture 60 est mobile selon une direction X60 perpendiculaire à l'axe X10 de l'élément de raccordement amont 10, c'est-à-dire dans le sens vertical en configuration d'utilisation normale du robinet 2.

L'organe de fermeture 60 comprend un disque d'étanchéité 60.1, configuré pour venir en contact plan sur plan contre le siège 62 lors de la fermeture du robinet 2. La soupape 6 n'est pas décrite plus avant dans la mesure où ce type de système est bien connu dans le domaine de la robinetterie.

Le dispositif anti-fissuration 8 est disposé en amont par rapport à la soupape 6 sur le trajet de l'eau lors de l'ouverture du robinet 2. Il comprend un tube en mousse 80, centré sur un axe confondu avec l'axe X10. Avantageusement, le tube 80 est en mousse d'élastomère.

La mousse constitutive du tube 80 comprend des cellules internes (non représentées), qui sont remplies d'air et qui sont fermées sur l'extérieur, c'est-à-dire que ces cellules sont étanches à l'eau, à l'inverse des cellules d'une éponge par exemple qui, elles, sont ouvertes. On parlera donc d'un tube en mousse à cellules fermées.

Le tube 80 est disposé à l'intérieur du corps 4. Ici, le tube en mousse 80 est à section circulaire, mais on pourrait imaginer, en variante, d'autres formes de section (polygonale ou autre) en fonction de la forme du corps du robinet. Typiquement, la section du tube en mousse 80 est complémentaire de celle de la paroi interne S4 du corps 4.

En particulier, le corps de robinet 4 comprend un logement 40 de réception du tube en mousse 80. Ce logement 40 est avantageusement conformé aux dimensions du tube en mousse 80. Le logement 40 est en fait un renfoncement périphérique, délimité par deux épaulements opposés définissant des surfaces annulaires en regard l'une de l'autre.

Le dispositif 8 comprend également un élément de maintien 82 du tube 80 en position contre une paroi interne S4 du corps de robinet 4. Grâce à l'élément de maintien 82, le tube en mousse 80 est avantageusement maintenu en position, de telle manière qu'il reste plaqué contre la paroi interne S4 du corps du robinet en fonctionnement normal et ne perturbe pas l'écoulement d'eau. En particulier, l'élément de maintien 82 permet d'éviter que le tube 80 vrille, ou se déforme de façon à se mettre en travers de l'écoulement d'eau.

En fonctionnement normal, le tube 80 et l'élément de maintien 82 sont traversés par l'écoulement d'eau, ce qui signifie que l'axe central du tube 80 et l'axe central de l'élément 82 sont sensiblement parallèles à la direction de l'écoulement à l'intérieur du robinet. En d'autres termes, le tube 80 et l'élément de maintien 82 comprennent chacun une ouverture de passage d'eau.

Typiquement, l'élément de maintien 82 est disposé à l'intérieur du tube 80, notamment coaxialement à l'intérieur du tube 80. Effectivement, dans l'exemple, l'élément de maintien 82 est de forme tubulaire, c'est pourquoi on parle d'un manchon de maintien. Comme le tube 80, l'élément de maintien 82 présente une section de forme circulaire. L'élément de maintien 82 est également centré sur un axe confondu avec l'axe X10.

De préférence, le diamètre intérieur du tube en mousse 80 est sensiblement identique au diamètre extérieur de l'élément de maintien 82. Ainsi, il n'y a pas ou peu de jeu radial entre le tube 80 et l'élément de maintien 82.

L'élément de maintien 82 comprend avantageusement au moins une, de préférence plusieurs ouvertures radiales 82.1. Dans l'exemple, les ouvertures radiales 82.1 sont formées par des fentes s'étendant parallèlement à l'axe du manchon à partir d'une extrémité longitudinale du manchon formant l'élément de maintien 82.

Notamment, les fentes s'étendant à partir de l'extrémité longitudinale amont sont référencées 82.1A et les fentes s'étendant à partir de l'extrémité longitudinale aval sont référencées 82.1B. Dans l'exemple, les fentes 82.1A et 82.1B sont réparties de manière régulière sur la circonférence du manchon et sont agencées en quinconce les unes par rapport aux autres.

Typiquement, l'élément de maintien 82 s'étend sensiblement sur toute la longueur du tube en mousse 80. En variante toutefois, l'élément 82 pourrait être plus court ou plus long que le tube 80.

Lors des périodes de gel, le tube en mousse 80 est comprimé radialement du fait de l'expansion de volume d'eau se transformant en glace à l'intérieur du robinet 2. Notamment, la glace passe à travers les ouvertures radiales 82.1 définies dans l'élément de maintien 82. Le tube en mousse 80 est dimensionné pour amortir l'expansion de l'eau lors du changement de phase et empêche ainsi que le corps du robinet 2 se retrouve sous contraintes. De cette façon, on prévient l'apparition de fissures dans le corps 4 du robinet.

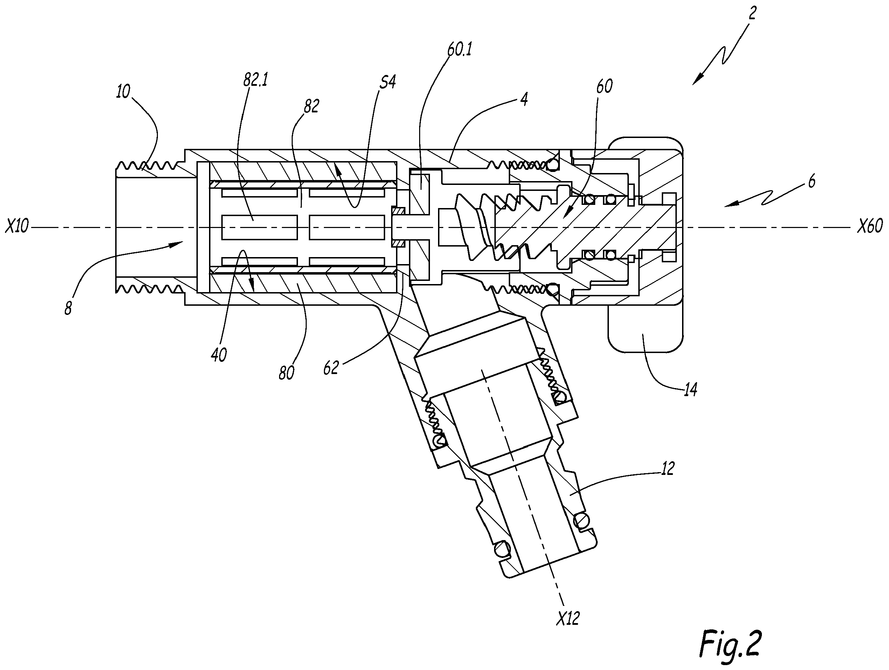

La figure 2 montre un second mode de réalisation d'un robinet à soupape 2. Dans ce qui suit, seules les différences par rapport au premier mode de réalisation sont mentionnées par souci de concision. De plus, les mêmes références numériques sont utilisées.

Dans ce mode de réalisation, l'élément de maintien 82 prend la forme d'un grillage de forme tubulaire, délimitant des ouvertures 82.1 de forme rectangulaire.

Egalement, dans ce cas particulier, l'axe X60 de déplacement de l'organe de fermeture 60 est parallèle à l'axe central X10 de l'élément de raccordement amont 10, c'est-à-dire que l'organe de fermeture 60 est mobile horizontalement lorsque le robinet est utilisé normalement. Ainsi, la molette 14 n'est pas disposée en partie haute du robinet, comme dans le premier mode de réalisation, mais sur le côté.

Les caractéristiques des modes de réalisation et variantes peuvent être combinées entre elles pour générer de nouveaux modes de réalisation de l'invention.

## Revendications

1. Robinet à soupape (2), comprenant un corps de robinet (4), une soupape (6) et un dispositif anti-fissuration (8) pour empêcher la fissuration du corps en période de gel, le dispositif anti-fissuration (8) comprenant un tube en mousse (80) à cellules fermées, disposé à l'intérieur du corps et un élément de maintien (82) du tube en position contre une paroi interne (S4) du corps de robinet, **caractérisé en ce que** l'élément de maintien (82) est disposé à l'intérieur du tube (80), notamment coaxialement à l'intérieur du tube.

2. Robinet selon la revendication 1, **caractérisé en ce que** le tube (80) est en mousse d'élastomère.

3. Robinet selon l'une des revendications précédentes, **caractérisé en ce que** l'élément de maintien(82) est de forme tubulaire.

4. Robinet selon la revendication précédente, **caractérisé en ce que** le diamètre intérieur du tube en mousse (80) est sensiblement identique au diamètre extérieur de l'élément de maintien (82).

5. Robinet selon l'une des revendications précédentes, **caractérisé en ce que** l'élément de maintien (82) comprend au moins une, de préférence plusieurs ouvertures radiales (82.1).

6. Robinet selon l'une des revendications précédentes, **caractérisé en ce que** l'élément de maintien (82) s'étend sensiblement sur toute la longueur du tube en mousse (80).

7. Robinet selon l'une des revendications précédentes, **caractérisé en ce que** le corps de robinet (4) comprend un logement (40) de réception du tube en mousse.

8. Robinet selon la revendication précédente, **caractérisé en ce que** le logement (40) est conformé aux dimensions du tube en mousse (80).

9. Robinet selon l'une des revendications précédentes, **caractérisé en ce que** le tube en mousse (80) est de section circulaire.
